# EUROPÄISCHE PATENTSCHRIFT

(11) **EP 2 491 280 B1**
(45) Veröffentlichungstag und Bekanntmachung des Hinweises auf die Patenterteilung: **11.11.2015**
(21) Anmeldenummer: 10759855.9
(22) Anmeldetag: 23.09.2010
(51) Int. Cl.: F16J 15/32, F16C 33/78

(54) **NICHTSCHLEIFENDER DICHTUNGSRING UND DICHTUNGSANORDNUNG**
NON-CONTACT SEALING RING AND SEALING ARRANGEMENT
BAGUE D'ÉTANCHÉITÉ SANS FROTTEMENT ET ENSEMBLE D'ÉTANCHÉITÉ

(30) Priorität: 22.10.2009 DE 102009050215
(43) Veröffentlichungstag der Anmeldung: 29.08.2012
(73) Patentinhaber: Schaeffler Technologies AG & Co. KG, 91074 Herzogenaurach (DE)
(72) Erfinder: WALTER, Wilhelm, 97455 Dittelbrunn (DE); HARTMANN, Erwin, 97493 Bergrheinfeld (DE)
(86) Internationale Anmeldenummer: PCT/EP2010/064008
(87) Internationale Veröffentlichungsnummer: WO 2011/047928

(56) Entgegenhaltungen:
- DE-A1- 10 358 876
- FR-A1- 2 926 345
- US-A- 4 428 629
- US-A1- 2009 127 795

## Beschreibung

### Gebiet der Erfindung

Die Erfindung betrifft einen Dichtungsring zur Abdichtung eines Wälzraumes eines Wälzlagers, wobei der Dichtungsring ein zur Befestigung an einem ersten Lagerteil vorgesehenes, ein elastisches Teil haltendes Trägerteil aufweist und der Dichtungsring mittels einer radialen oder axialen Dichtlippe am elastischen Teil zur Abdichtung des Wälzraumes zwischen dem ersten Lagerteil und einem zum ersten Lagerteil relativ drehbaren zweiten Lagerteil oder zwischen dem ersten Lagerteil und einem anderen an das zweite Lagerteil befestigten, relativ zum ersten Lagerteil bewegbaren Bauteil vorgesehen ist. Ferner betrifft die Erfindung eine Dichtungsanordnung mit einem derartigen Dichtungsring.

Ein derartiger Dichtungsring beziehungsweise eine derartige Dichtungsanordnung wird in Wälzlagern eingesetzt, deren Wälzraum von der Außenumgebung abgeschirmt beziehungsweise abgedichtet werden muss. Dabei ergibt sich das Problem, dass ein erstes Lagerteil gegenüber einem zweiten Lagerteil relativ zu bewegen ist, wobei zwischen den Lagerteilen Wälzkörper angebracht sind, die eine Last vom ersten Lagerteil auf das zweite Lagerteil oder umgekehrt übertragen. Hierbei befinden sich die Wälzkörper im Wälzraum, das heißt in einem Raum, der von der Umgebung abgedichtet werden muss und in der Regel von den beiden Lagerteilen und auch gegebenenfalls von weiteren Lagerteilen oder Bauteilen begrenzt wird.

Der Wälzraum ist insbesondere von Verschmutzungen freizuhalten, die zu einem Pitting-Effekt führen können, d.h. auf den Laufflächen der Lagerteile, wie z.B. Innenringe oder Außenringe Schäden verursachen und damit die Lebensdauer des Wälzlagers reduzieren. Ebenso ist das Eindringen von Feuchtigkeit nachteilig, da eintretender Rostfraß ebenso zu Beschädigungen der Lauffläche in bzw. der Wälzkörper führen kann. Deswegen werden Wälzlager mit so genannten schleifenden Dichtungsanordnungen versehen, die zumindest eine axiale oder radiale Dichtlippe aufweisen, die schleifend an dem relativ zur Dichtlippe bewegbaren Lagerteil anliegt. Zur Reibungsverminderung wird diese Anlage- oder auch Dichtfläche mit einem Schmiermittel versehen, so dass der Reibwert des Wälzlagers trotz schleifende Dichtungen niedrig bleibt. Jedoch verursacht die Reibung nach wie vor einen nachteiligen Energieverbrauch.

Beispielsweise auf dem Gebiet der Radlager für Personenkraftwagen oder Lastkraftwagen, werden derartig schleifend abgedichtete Radlager verwendet. Leider verursachen diese aufgrund ihres Reibwertes einen hohen Kraftstoffverbrauch, den man in der Vergangenheit bereits mit verschiedenen Ansätzen zu reduzieren versucht hat. Dabei wurde jedoch stets ein hoher Reibwert in Kauf genommen, wenn das Radlager unter anspruchsvollen Betriebsbedingungen, z.B. bei einem hohen Verschmutzungsgrad oder einer hohen Luftfeuchte eingesetzt werden musste.

Aus WO 2008/102505 A1 sind Kassettendichtungen bekannt, die sowohl radial schleifend anliegende Dichtlippen, als auch axial schleifend anliegende Dichti lippen einsetzen, die von einem Trägerteil gehalten werden und an einem Schleuderring anliegen. In Abhängigkeit von den Dichtungsvoraussetzungen werden Anzahl der schleifenden Dichtlippen sowie deren Vorspannung gegenüber der Anlauffläche variiert.

DE 103 58 876 A1 offenbart einen Dichtungsring mit einer axialen Dichtlippe, welche eine Ringnut aufweist, die mit Fett gefüllt ist.

### Zusammenfassung der Erfindung

Der Erfindung liegt die Aufgabe zu Grunde eine kosteneffektive, leicht zu installierende und reibungsarme Dichtungsanordnung anzugeben, die sich eignet Wälzräume von Wälzlagern, insbesondere Radlagern, von der Umgebung abzudichten.

Diese Aufgabe wird bei einem Dichtungsring beziehungsweise einer Dichtungsanordnung der eingangsgenannten Art durch die Merkmale des Anspruchs 1 gelöst. Die Dichtlippe ist dazu vorgesehen, mit dem zweiten Lagerteil oder mit dem Bauteil einen Spalt zu bilden und die Dichtlippe weist eine Ringnut zur Ausbildung eines den Spalt schließenden Schmiermittelringes auf.

Vorteilhafterweise ist das Bestandteil des zweiten Dichtungsrings ein wenigstens teilweise ringförmig und oder ein teilweise hohlzylindrisches Bestandteil. Damit ist gewährleistet, dass das Bestandteil die Formstabilität des Schmiermittelringes umfänglich unterstützt. Denkbar ist jedoch auch, dass ein anderes Bestandteil oder Bauteil abschnittsweise in Umfangsrichtung für die Formstabilität des Schmiermittelringes eingesetzt wird. Erfindungsgemäß wird die Querschnittsfläche des Schmiermittelringes in Umfangsrichtung varriert, um den Schmiermittelfluss in Umfangsrichtung zu kontrollieren beziehungsweise stellenweise zu beschleunigen, um beispielsweise an stark verschmutzten Stellen einen erhöhten Schmiermittelfluss zu erzeugen.

Der Erfindung liegt die Erkenntnis zu Grunde, dass eine Alternative zur schleifenden Dichtlippe der Dichtungsanordnung nicht notwendigerweise eine Spaltdichtung sein muss, um den Wälzraum vor dem Eindringen von Schmutzpartikeln und Feuchtigkeit aus der Wälzlagetumgebung zu schützen.

Der erfindungsgemäße Dichtungsring zur Abdichtung eines Wälzraumes eines Wälzlagers ist zur Befestigung an einem ersten Lagerteil vorgesehen. Dies kann beispielsweise durch einen Presssitz bei geeigneter Radienwahl oder durch eine Gummischnappvorrichtung am Dichtungsring in Kombination mit einer Nut am ersten Lagerteil geschehen. Der Dichtungsring weist ein Trägerteil auf, welches zum Halten eines elastischen Teiles vorgesehen ist, woran eine radiale und/oder axiale Dichtlippe ausgeformt ist. Eine radiale Dichtlippe bedeutet in diesem Zusammenhang, dass eine Lippe in radialer Richtung zur Rotationsachse des Wälzlagers gegenüber einem Lagerteil oder Bauteil schleifend oder nicht schleifend abdichten soll. Entsprechendes gilt für axiale Dichtlippen, die parallel zur Rotationsachse wirken. Denkbar sind auch Kombinationen, das heißt, eine Dichtlippe, die sowohl eine axiale Komponente als auch eine radiale Komponente aufweist.

Der Dichtungsring ist dazu vorgesehen zwischen dem ersten Lagerteil und dem zweiten Lagerteil, welches sich relativ zu dem ersten Lagerteil drehen kann, abzudichten. Dies geschieht zum einen durch das das elastische Teil haltende Trägerteil in Kombination mit der Dichtlippe des elastischen Teiles. Wird der Dichtungsring also beispielsweise zwischen dem ersten und dem zweiten Lagerteil eingesetzt, so stellt dieser bereits eine komplette Dichtungsanordnung dar, die gegebenenfalls keine weiteren Dichtungsbauteile, wie z.B. einem Schleuderring, benötigt.

Beispielsweise handelt es sich bei dem ersten Lagerteil um einen stationären Außenring eines Radlagers und bei dem zweiten Lagerteil um die Radnabe oder einen drehbaren Innenring, wie es von Personenkraftwagen bekannt ist. Bei Lastkraftwagen wiederum ist das zweite Lagerteil stationär und das erste Lagerteil drehbar angeordnet. In jedem Fall sind die beiden Lagerteile relativ zueinander drehbar angeordnet.

Erfindungsgemäß ist vorgesehen, dass die Dichtlippe mit dem zweiten Lagerteil oder mit dem Bauteil einen Spalt bildet. Dies erfüllt zunächst alle Eigenschaften einer Spaltdichtung entsprechen. Allerdings weist die Dichtlippe ferner eine Ringnut zur Ausbildung eines den Spalt schließenden Schmiermittelringes auf. Dieser Schmiermittelring besteht aus Schmiermittel und wird von der Dichtlippe beziehungsweise durch deren Ringnut in seiner Form bestimmt. Im Betriebszustand soll der Schmiermittelring nicht nur durch die Ringnut geformt werden, sondern auch durch das zweite Lagerteil oder das Bauteil, welches beispielsweise ein Element der Dichtungsanordnung, insbesondere ein Schleuderring, sein kann. Somit kann der Schmiermittelring zumindest einseitig - aber auch zweiseitig - durch vorzugsweise in axialer Richtung gerichtete konkave Formen gebildet werden, die jeweils relativ zueinander bewegbaren Lagerteilen des ersten Lagerteils und des Bauteils angehören. Durch die Konsistenz des Schmiermittels, insbesondere durch dessen Viskosität, wird sichergestellt, dass ein Auslaufen des Schmiermittels durch den Spalt in Richtung des Wälzraumes oder entgegengesetzt ausgeschlossen wird. Während des Betriebes wird der Schmiermittelring nicht mehr aus reinem Schmiermittel bestehen, sondern kann im Laufe der Zeit mit Fremdpartikel angereichert werden, so dass sich die Viskosität ändert. Diese Viskositätsschwankungen müssten bei der Festlegung der Spaltbreite berücksichtigt werden, so dass ein Ausfluss weitgehend verhindert werden kann.

Andererseits ist es denkbar, dass man einen kontinuierlichen Ausfluss in die Betriebsumgebung des Wälzlagers beziehungsweise in vorgelagerte Zwischenräume der Dichtungsanordnung (gegebenenfalls mit Fangrinne) zulässt, um ein kontinuierliches Ausschwemmen von Fremdpartikeln aus dem Schmiermittelring zu bewerkstelligen und damit auf längere Sicht die Dichtwirkung des Schmiermittelringes konstant hält, beziehungsweise vorteilhaft kontrollieren kann. Eine dem Spalt vorgelagerte Fangrinne ist insofern sinnvoll, da diese eine umfänglich Ableitung der ausgeschwemmten Schmutzpartikel erleichtert und diese von der Schwerkraft nach unten aus der Dichtungsanordnung heraus befördert.

Bei einer vorteilhaften Ausführungsform wird die Ringnut durch einen ersten Fortsatz in einem zweiten Fortsatz der Dichtungslippe gebildet. Beide Fortsätze, oder auch nur einer der beiden Fortsätze, eignen sich dazu die gewünschte Spaltbreite zu realisieren, indem der Fortsatz entsprechend nahe an das zweite Lagerteil oder das Bauteil herangeführt wird. In diesem Zusammenhand ist es eventuell sinnvoll die Breite des Spaltes über die Ringnut der Dichtlippe hinweg zu variieren, so dass der Ausfluss in eine vorteilhafte Richtung geleitet werden kann. So ist es z.B. denkbar, dass der erste Fortsatz einen breiteren Spalt bildet als der zweite Fortsatz, damit beispielsweise bei einer Temperaturerhöhung oder einer anderen Beanspruchung das Schmutzpartikel enthaltende Schmiermittel am ersten Fortsatz vorbei in einen Zwischenraum der Dichtungsanordnung oder in eine Fangrinne geleitet wird. Hat das Wälzlager intern wenig Schmiermittelreserven, so ist es möglich die Breitenvariation des Spaltes umgekehrt auszuführen, so dass das Schmiermittel im Wälzraum gehalten wird.

Vorteilhafterweise weist der erste Fortsatz eine erste Fläche zur Bildung des Spaltes mit einer ersten Gegenfläche des Bauteils oder des zweiten Lagerteils auf. Konkrete Eigenschaften der ersten Fläche und der ersten Gegenfläche können weiter dazu verwendet werden den Ausfluss von Schmiermitteln zu kontrollieren. Denkbar wären an dieser Stelle beispielsweise Schaufelartige Rippen oder Rillen, oder einer anderen Struktur, die zur Förderung des Schmiermittels in die eine oder andere Richtung eingesetzt werden kann. Vorteilhafterweise weist der zweite Fortsatz eine zweite Fläche zur Bildung des Spaltes mit einer zweiten Gegenfläche des Bauteils oder des zweiten Lagerteils auf. Hierbei stellen sich ähnliche Vorteile ein, wie bei den entsprechenden Maßnahmen bei der ersten Fläche und der ersten Gegenfläche.

Bei einer vorteilhaften Ausführungsform besteht der in der Ringnut einliegende Schmiermittelring aus Fett oder einem ausreichend zähflüssigen Öl. Durch eine Vorauswahl der Viskosität kann eine optimale Abdichtung gewährleistet werden.

Bei einer vorteilhaften Ausführungsform handelt es sich bei dem zweiten Lagerteil um eine Nabe, Radnabe oder um einen Innenring.

Bei einer vorteilhaften Ausführungsform ist das Bauteil ein zweiter Dichtungsring oder Schleuderring. Das Bauteil kann zu der Dichtungsanordnung gehören, kann aber auch ein Bauteil sein, welches eine andere Funktion aufweist. Vorteilhafterweise führt der zweite Dichtungsring im Kombination mit dem erfindungsgemäßen Dichtungsring zu einer erhöhten Dichtungswirkung. Zum einen weist das Bauteil beispielsweise eine oder beide der genannten Gegenflächen auf oder unterstützt die Formgebung des Schmiermittelringes dadurch, dass eine konkave Ausformung an dem Bauteil ausgebildet ist. Eine derartige konkave Ausformung kann durch eine Rinne gebildet werden, wie sie durch eine Biegung eines aus Metall bestehenden Dichtungs- beziehungsweise Schleuderringes entstehen kann. Da derartige Biegungen oder Kröpfungen (Mehrfachbiegungen) häufig bei Dichtungsanordnungen dieser Art vorkommen, kann hier ein Synergieeffekt erzielt werden, indem diese Rinne zur Bildung des Schmiermittelringes eingesetzt wird.

Bei einer vorteilhaften Ausführungsform ist das erste Lagerteil ein Außenring oder eine Radnabe.

Bei einer vorteilhaften Ausführungsform ist eine weitere axiale und oder radiale Dichtlippe am elastischen Teil ausgeformt. Vorteilhafterweise lässt sich die erfindungsgemäße Dichtlippe mit ihrem Schmiermittelring ohne weiteres in Kombination mit anderen Dichtlippen verwenden, wie beispielsweise eine Vordichtung bilden. Andererseits kann die erfindungsgemäße Dichtlippe dazu verwendet werden Fremdpartikel aufzusammeln und eine nachgeschaltete Dichtlippe vor diesen zu schützen.

Vorteilhafterweise weist eine Dichtungsanordnung, die beispielsweise als Kassettendichtung ausgeführt sein kann, einen oder mehrere erste erfindungsgemäße Dichtungsringe auf, die jeweils einem zweiten Dichtungsring zugeordnet sind, wobei der oder die zweiten Dichtungsringe am zweiten Lagerteil befestigbar sind.

Bei einer vorteilhaften Ausführungsform weist der zweite Dichtungsring oder eines seiner Bestandteile zur Kontaktierung des Schmiermittelringes in der Ringnut der ersten Dichtlippe die erste und oder zweite Gegenfläche auf. Damit wirkt der zweite Dichtungsring, der beispielsweise ein Schleuderring sein kann, optimal mit dem ersten Dichtungsring zusammen, wobei durch eine entsprechende Gestaltung der genannten Flächen der Ausfluss aus dem Schmiermittelring kontrollierbar ist und durch die Gestaltung des Bauteiles zwischen oder an diesen Flächen die Querschnittsform des Schmiermittelringes kontrolliert werden kann. Damit kann das Volumen des Schmiermittelringes derart gestaltet werden, dass die erforderliche Menge an Schmiermittel für den wasserdichten Schmiermittelverschluss vorliegt.

Der Querschnitt des Schmiermittelringes kann hierbei die unterschiedlichsten Formen annehmen, wobei kreisartige oder ellipsenartige Querschnitte am einfachsten zu erzielen sind.

Vorteilhafterweise wird der Bestandteil des zweiten Dichtungsringes durch eine Biegung oder eine Kröpfung des zweiten Dichtungsringes gebildet. Derartige Biegungen oder Kröpfungen werden beispielsweise dazu verwendet am zweiten Dichtungsring im Kopplungsbereich ein magnetisierbares oder magnetisches Material, insbesondere einen Geberring, anzubringen, wie zum Beispiel einen Multipolencoder. Damit ist eine besonders. Platz sparende Anordnung möglich, bei der einerseits axial und radial außenliegend der Multipolencoder angeordnet ist, sowie radial und axial innenliegend der erfindungsgemäße Schmiermittelring angeordnet ist. Dadurch ist es möglich eine Dichtungsanordnung mit geringer axialer Breite zu schaffen, die sich wiederum auf die axiale Breite des Wälzlagers positiv auswirkt.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispiele näher beschrieben und erläutert.

### Kurze Beschreibung der Figuren

Es zeigen:
- Fig. 1: eine erste als Kassettendichtung ausgeführte Dichtungsanordnung für ein Radlager,
- Fig. 2: eine zweite als Kassettendichtung ausgeführte Dichtungsanordnung für ein Radlager,
- Fig. 3: eine dritte als Kassettendichtung ausgeführte Dichtungsanordnung für ein Radlager, und
- Fig. 4: eine vierte als Kassettendichtung ausgeführte Dichtungsanordnung für ein Radlager.

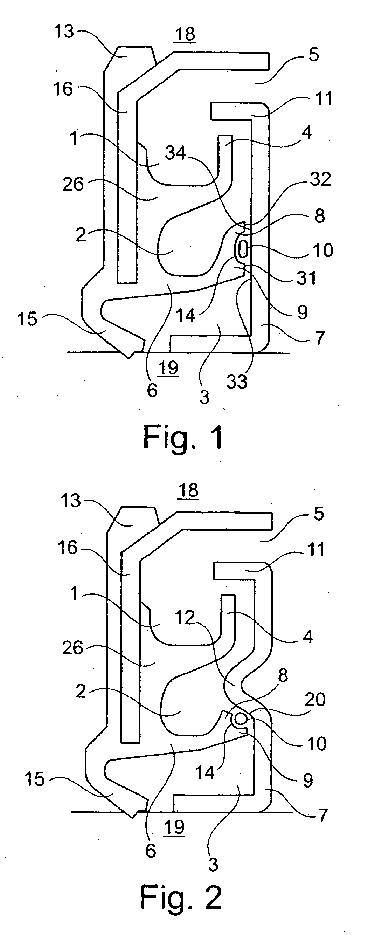

Fig. 1 zeigt eine erste als Kassettendichtung ausgeführte Dichtungsanordnung für ein Radlager. Die Dichtungsanordnung besteht aus einem als Schleuderring 7 ausgeführten Bauteil 7 und einem Dichtungsring, der aus einem Trägerteil 16 und einem elastischen Teil 26, welches beispielsweise aus einem Elastomer, besteht.

Das Trägerteil 16 ist mittels Presssitz am Außenring 18 befestigt, der an einem nicht abgebildeten Radträger befestigt ist, d.h. einen stationären Außenring 18 darstellt. Das elastische Teil 26 beinhaltet einen statisch dichtenden Fortsatz 13, der das Eindringen von Feuchtigkeit, die zwischen den Außenring 18 und das Trägerteil 16 gelangt ist, nicht weiter in den Wälzraum vordringen lässt.

Ferner weist das elastische Teil 26 eine radiale Dichtlippe 15 auf, die schleifend am Innenring 19 anliegt und durch ihre eigene Elastizität gegenüber diesem vorgespannt ist. Des weiteren weist das elastische Teil 26 eine axiale Dichtlippe 4 auf, die zunächst in eine axiale Richtung verläuft, jedoch in eine radiale Richtung umschwenkt, in radialer Richtung parallel zum Schleuderring 7 verläuft und mit diesem einen Dichtungsspalt bildet, der mittels eines Endstücks 11 des Schleuderringes 7 radial abgedeckt wird, so dass die Spaltöffnung axial auf den Wälzraum des Radlagers gerichtet ist.

Durch die abknickende Form der axialen Dichtlippe 4 wird eine Fangrinne 1 gebildet, die radial innerhalb der Spaltöffnung zwischen der axialen Dichtlippe 4 und dem Endstück 11 angeordnet ist. Damit ist es zwar prinzipiell möglich, dass durch die radial weiter außen gelegene Spaltöffnung 5 Fremdpartikel und Feuchtigkeit eintreten, jedoch werden diese über die Fangrinne 1 abgeleitet ohne in den Zwischenraum der Fangrinne 2 zu gelangen.

Der Schleuderring 7 ist mittels Presssitz auf dem Innenring 19 befestigt und weist axial sowie ein radial ausgerichtetes Bestandteil auf. Das Endstück 11 ist axial ausgerichtet, genau so wie das Teil des Schleuderring 7 im Bereich des Innenrings 19. Diese Teile des Innenrings 7 weisen eine hohlzylindrische Form auf. Am ringförmigen Teil des Schleuderrings 7 befinden sich die Gegenflächen 33 und 34, die zusammen mit Flächen 32 und 31 der axialen Dichtlippe 6 einen Spalt in radialer Richtung bilden.

Zwischen den Flächenpaaren 32,34 und 31, 33 befindet sich ein Schmiermittelring 10, der im Längsschnitt (wie in der Figur 1 gezeigt) eine im wesentlichen elliptische Form einnimmt. Jedoch führt die Ringnut aufgrund ihrer Form dazu, dass der Schmiermittelring in der in der Figur gezeigten Schnittebene eine im wesentlichen konvexe Form und axial entgegengerichtet eine im wesentlichen flache Form aufgrund der flachen Innenseite des Schleuderrings 7 einnimmt. Insofern formen die axiale Dichtlippe 6, als auch der Schleuderring 7 den Schmiermittelring 10. Vorteilhafterweise kann man die Flächenpaare weiter radial voneinander trennen, womit er Schmiermittelring 10 im Schnitt elliptischer wird und damit dessen Volumen zunimmt. Damit ist ein großes Schmiermittelreservoir geschaffen, welches auch die Aufnahme von Fremdpartikel leisten kann ohne Einbußen bei der Dichtwirkung hinnehmen zu müssen.

Vorteilhafterweise ist der Abstand der Flächen 32 und 34 geringer als der Abstand der Flächen 31 und 33. Dies verhindert einen Ausfluss des Schmiermittels, der nachteiligerweise durch die zentrifugale Kräfte einer Rotationsbewegung des Schleuderringes 7 unterstützt wird. In jedem Fall ist die Spaltöffnung mit der Zähflüssigkeit bzw. der Viskosität des verwendeten Schmiermittels abzustimmen.

Vorteilhafterweise ist die axiale Dichtlippe 6 derart geformt, dass diese eine Fangrinne 2 bildet, die eintretendes Wasser und Schmutzpartikel sammelt und beim Abfließen entlang der axialen Dichtlippe 4 eine Berührung mit dem Schmiermittelring verhindert.

Vorteilhafterweise ist der Zwischenraum 3 beziehungsweise die radiale Dichtlippe 15 der axialen Dichtlippe 6 nachgeschaltet, womit nach dem Aufbrauchen des Schmiermittels im Schmiermittelring 10 immer noch eine Dichtwirkung aufrechterhalten werden kann. Dabei bildet die axiale Dichtlippe 6 lediglich eine weitere Spaltdichtung zusammen mit dem Schleuderring 7.

Fig. 2 zeigt eine zweite als Kassettendichtung ausgeführte Dichtungsanordnung für ein Radlager. Die zweite Kassettendichtung unterscheidet sich von der ersten der Figur 1 durch eine andere Ausführung der Dichtlippe 6 und des Schleuderringes 7. Bei im Vergleich zur ersten Kassettendichtung unveränderten Bestandteilen gelten die Ausführungen zu Figur 1.

Vorteilhaft ist die Tatsache, dass der Schleuderring 7 nunmehr eine Kröpfung 12 aufweist, die insbesondere eine Rinne 20 bildet, die zwischen den Flächenpaaren angeordnet ist und somit zur Formung des Schmiermittelringes 10 beiträgt. Die Rinne 20 und auch die Ringnut 14 bilden eine im wesentliche kreisförmige Begrenzung in der Schnittebene. Es wird eine nachteilige Fremdpartikelverteilung, die gegebenenfalls durch Zentrifugalkräfte oder andere auftretende Kräfte hervorgerufen wird, dadurch unterbunden, dass der radiale und axiale Weg, den ein Fremdpartikel innerhalb des Schmiermittelringes 20 zurücklegen kann, im wesentlichen gleich ist.

Ferner führt die Kröpfung 12 dazu, dass der Teilspalt, die er am Fortsatz 8 der axialen Dichtlippe 6 gebildet wird im wesentlichen in axialer Richtung orientiert ist, womit der Effekt des Schmiermittelausflusses durch eine Zentrifugalkraft weitgehend unterbunden werden kann. Ein völlig in axialer Richtung verlaufender Teilspalt an dieser Stelle würde diesen Effekt völlig unterbinden. Allerdings führt eine axiale Dichtlippe 6 mit ihrem Fortsatz 8, wie sie in der Figur 2 gezeigt ist, auch dazu, dass bei einer Zentrifugalkraft die axiale Dichtlippe im Bereich des Fortsatzes 8 in radialer Richtung auf die Kröpfung des Schleuderringes 7 zuwandert und die Breite des Teilspaltes verringert und somit den Ausfluss verhindert.

Der Vorteil eines nicht völlig in axialer Richtung verlaufenden Teilspalts am Fortsatz 8 besteht zudem darin, dass selbst bei ablaufendem Wasser aus der Fangrinne 2 dieses nicht mit dem Schmiermittelring 10 in Berührung kommt, da dieses von der axialen Dichtlippe 6 direkt auf die Kröpfung 12 fließen kann und durch den Spalt zwischen deren axialen Dichtlippe 4 und des Endstückes 11 weiter nach außen abgeleitet wird.

Vorteilhafterweise kann der Zwischenraum 3 als Schmiermittelreservoir dienen, welches den Schmiermittelring 10 über den Teilspalt zwischen dem Fortsatz 9 der axialen Dichtlippe 6 und dem Schleuderring 7 kontinuierlich mit Schmiermittel versorgt.

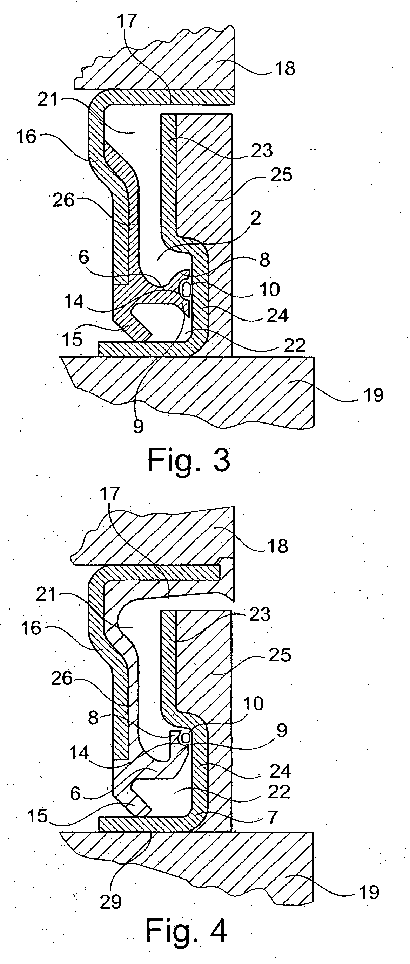

Fig. 3 zeigt eine dritte als Kassettendichtung ausgeführte Dichtungsanordnung für ein Radlager. Es kann auf die Ausführungen zu Figur 1 verwiesen werden, wobei die dort gezeigte erste Dichtungsanordnung eine Vordichtung mit einer Fangrinne aufweist, die bei der dritten Dichtungsanordnung der Figur 3 im wesentlichen durch eine Anordnung eines Geberringes ersetzt wird:

Vorteilhafterweise bilden der Geberring 25 zusammen mit dem äußeren Ringteil 23 und dem Trägerteil 16 einen Eingangspalt 17, der den Zwischenraum 21 zur Umgebung des Wälzlagers hin abdichtet.

Neben der vorteilhaften räumlichen Anordnung des Geberringes 25 entsteht zudem ein besonderer Schutzmechanismus für die axiale Dichtlippe 6 beziehungsweise den Schmierstoffring 10, dadurch dass durch den Eingangsspalt 17 eindringende Schmutzpartikel durch das Wasser in radialer Richtung am äußeren Ringteil 23 entlang auf den Innenring 19 zu geleitet werden und dann in der Fangrinne 2 aufgefangen werden. Damit ist der Schmierstoffring 10 für die Fremdpartikel schwieriger zu erreichen, womit insgesamt die Lebensdauer erhöht wird.

Diese Lebensdauererhöhung wird somit durch eine zweifache Biegung des Schleuderringes 7 erzielt, die zu den beiden sich in radialer Richtung erstreckenden Ringteilen 23 und 24 führen, die in axialer Richtung zueinander versetzt sind, wobei das äußere Ringteil 23 in Richtung des Wälzraumes axial verschoben ist und das innere Ringteil 24 in die Gegenrichtung axial verschoben ist. Beide sind integrale Bestandteile des Schleuderringes 7.

Fig. 4 zeigt eine vierte als Kassettendichtung ausgeführte Dichtungsanordnung für ein Radlager. Im Vergleich zur zweiten Dichtungsanordnung der Fig. 2 weist die in der Figur 4 gezeigte vierte Dichtungsanordnung keine axiale Dichtlippe 4 auf, sondern einen kleineren Eingangsspalt, der von dem elastischen Teil 26, dem äußeren Ringteil 23 des Schleuderringes 7 und dem Geberring 25 gebildet wird.

Des weiteren ist es möglich einen wesentlichen Anteil des Geberringes 25 axial neben dem äußeren Ringteil 23 anzuordnen. Damit kann einerseits der hervorragende Schutz der axialen Dichtlippe beziehungsweise des Schmiermittelringes 10 in ähnlicher Weise herbeigeführt werden wie bei der zweiten Dichtungsanordnung der Figur 2, jedoch kann radial außen liegend dazu der Hauptanteil des Geberringes 25 angeordnet werden. Damit führt diese besondere Anordnung des Geberringes 25 zu einer für die Lebensdauer der Dichtungsanordnung vorteilhaften Position des Schmiermittelringes 10.

Alternativ oder zusätzlich kann soweit es möglich ist auch neben einem inneren Ringteil 24 des Schleuderrings 17 einen Teil des Geberringes 25 verlaufen. Wichtig ist jedoch, dass das für den Geberring 25 zur Verfügung stehende Volumen sehr groß gehalten werden kann, ohne axial in die Breite gehen zu müssen. Folglich lassen sich auch Wälzlager, insbesondere Radlager, mit vorteilhaft geringer axialer Breite herstellen.

Zusammenfassend betrifft die Erfindung einen Dichtungsring zur Abdichtung eines Wälzraumes eines Wälzlagers, wobei der Dichtungsring ein zur Befestigung an einem ersten Lagerteil vorgesehenes, ein elastisches Teil haltendes Trägerteil aufweist und der Dichtungsring mittels einer radialen oder axialen Dichtlippe am elastischen Teil zur Abdichtung des Wälzraumes zwischen dem ersten Lagerteil und einem zum ersten Lagerteil relativ drehbaren zweiten Lagerteil oder zwischen dem ersten Lagerteil in einem anderen an das zweite Lagerteil befestigten, relativ zum ersten Lagerteil bewegbaren Bauteil vorgesehen ist. Ziel ist es einen kosteneffektiven, leicht zu installierenden und reibungsarmen Dichtungsring beziehungsweise Dichtungsanordnung anzugeben. Hierzu wird ein Schmiermittelring eingesetzt, der durch eine Ringnut in einer Dichtlippe gebildet und gehalten wird und andererseits von dem zweiten Lagerteil oder dem Bauteil zumindest gehalten wird, aber auch geformt werden kann, so dass der Schmiermittelring einen Spalt zwischen der Dichtlippe und dem zweiten Lagerteil beziehungsweise den Bauteilen abschließt. Dabei wird eine Querschnittsfläche des Schmiermittelringes in einer Umfangsrichtung varriert.

### Bezugszeichen liste

- 1: erste Fangrinne
- 2: zweite Fangrinne
- 3: Zwischenraum
- 4: Dichtlippe
- 5: Spaltdichtung
- 6: axiale Dichtlippe
- 7: Bauteil
- 8: erster Fortsatz
- 9: zweiter Fortsatz
- 10: Schmiermittelring
- 11: Endstück
- 13: Dichtstück
- 14: Ringnut
- 15: radiale Dichtlippe
- 16: Trägerteil
- 18: Außenring
- 19: Innenring
- 20: Rinne
- 21: Zwischenraum
- 22: Zwischenraum
- 23: äußeres Ringteil
- 24: Inneres Ringteil
- 25: Geberring
- 26: elastisches Teil
- 31: zweite Fläche
- 32: erste Fläche
- 33: zweite Gegenfläche
- 34: erste Gegenfläche

## Patentansprüche

1. Dichtungsanordnung umfassend einen Dichtungsanordnung und einen Schmiermittelring, wobei der Dichtungsring ein zur Befestigung an einem ersten Lagerteil (18) vorgesehenes, ein elastisches Teil (26) haltendes Trägerteil (16) aufweist und der Dichtungsring mittels einer axialen Dichtlippe (6) am elastischen Teil (26) zur Abdichtung des Wälzraumes zwischen dem ersten Lagerteil (18) und einem zum ersten Lagerteil (18) relativ drehbaren zweiten Lagerteil (19) oder zwischen dem ersten Lagerteil (18) und einem anderen an das zweite Lagerteil (19) befestigten, relativ zum ersten Lagerteil (18) bewegbaren Bauteil (7) vorgesehen ist, **dadurch gekennzeichnet, dass** die Dichtlippe (6) dazu vorgesehen ist mit dem zweiten Lagerteil (19) oder mit dem Bauteil (7) einen Spalt zu bilden und die Dichtlippe (6) eine Ringnut (14) mit dem darin aufgenommenen Schmiermittelring (10) zum Schließen des Spaltes aufweist und dass eine Querschnittsfläche des Schmiermittelringes (10) in einer Umfangsrichtung variiert.

2. Dichtungsanordnung zur Abdichtung eines Wälzraumes eines Wälzlager nach Anspruch 1, wobei die Ringnut (14) durch einen ersten Fortsatz (8) oder durch den ersten Fortsatz (8) und einen zweiten Fortsatz (9) der Dichtungslippe (6) gebildet wird.

3. Dichtungsanordnung zur Abdichtung eines Wälzraumes eines Wälzlager nach Anspruch 2, wobei wenigstens der erste Fortsatz (8) eine erste Fläche (32) zur Bildung des Spaltes mit einer ersten Gegenfläche (34) des Bauteils (7) oder des zweiten Lagerteils (19) aufweist.

4. Dichtungsanordnung zur Abdichtung eines Wälzraumes eines Wälzlager nach Anspruch 3, wobei der zweite Fortsatz (9) eine zweite Fläche (31) zur Bildung des Spaltes mit einer zweiten Gegenfläche (33) des Bauteils (7) oder des zweiten Lagerteils (19) aufweist.

5. Dichtungsanordnung nach einem der vorhergehenden Ansprüche, wobei der in der Ringnut (14) einliegende Schmiermittelring (10) aus Fett besteht.

6. Dichtungsanordnung nach einem der vorhergehenden Ansprüche, wobei das zweite Lagerteil (19) eine Radnabe oder ein Innenring (19) ist.

7. Dichtungsanordnung nach einem der vorhergehenden Ansprüche, wobei das Bauteil (7) ein zweiter Dichtungsring (7) ist.

8. Dichtungsanordnung nach einem der vorhergehenden Ansprüche, wobei das erste Lagerteil (18) ein Außenring (18) oder eine Radnabe ist.

9. Dichtungsanordnung nach einem der vorhergehenden Ansprüche, wobei eine weitere axiale (4) und/oder radiale (15) Dichtlippe am elastischen Teil (26) ausgeformt ist/sind.

10. Dichtungsanordnung mit einem ersten Dichtungsring und einem Schmiermittelring (10) nach einem der vorhergehenden Ansprüche 1 bis 9 und einem zweiten, am zweiten Lagerteil (19) befestigbaren Dichtungsring (7).

11. Dichtungsanordnung nach Anspruch 10, wobei der zweite Dichtungsring (7) oder eines seiner Bestandteile zur Kontaktierung des Schmiermittelrings (10) in der Ringnut (14) der ersten Dichtlippe (6) vorgesehen ist und die erste (34) und/oder zweite (33) Gegenfläche aufweist.

12. Dichtungsanordnung nach Anspruch 11, wobei das Bestandteil des zweiten Dichtungsringes ein wenigstens teilweise ringförmig und/oder ein teilweise hohlzylindrisches Bestandteil ist.

13. Dichtungsanordnung nach Anspruch 10 oder 11, wobei das Bestandteil des zweiten Dichtungsringes durch eine Biegung oder eine Kröpfung des zweiten Dichtungsringes (7) gebildet wird.

14. Dichtungsanordnung nach Anspruch 13, wobei der Dichtungsring (7) im Kröpfungsbereich ein magnetisierbares oder magnetisches Material, insbesondere einen Geberring (25), aufweist.

15. Wälzlager, insbesondere Radlager, mit einer Dichtungsanordnung nach einem der Ansprüche 1 bis 14.

## Claims

1. Sealing arrangement comprising a sealing ring for sealing a rolling space of an antifriction bearing and a lubricant ring, the sealing ring having a carrier part (16) which is provided for fastening purposes on a first bearing part (18) and holds an elastic part (26), and the sealing ring being provided by means of an axial sealing lip (6) on the elastic part (26) for sealing the rolling space between the first bearing part (18) and a second bearing part (19) which can be rotated relative to the first bearing part (18), or between the first bearing part (18) and another component (7) which is fastened to the second bearing part (19) and can be moved relative to the first bearing part (18), **characterized in that** the sealing lip (6) is provided for forming a gap with the second bearing part (19) or with the component (7), and the sealing lip (6) has an annular groove (14) with the lubricant ring (10) held therein for closing the gap, and **in that** a cross-sectional area of the lubricant ring (10) varies in a circumferential direction.

2. Sealing arrangement according to Claim 1, the annular groove (14) being formed by a first projection (8) or by the first projection (8) and a second projection (9) of the sealing lip (6).

3. Sealing arrangement according to Claim 2, at least the first projection (8) having a first face (32) for forming the gap with a first corresponding face (34) of the component (7) or of the second bearing part (19).

4. Sealing arrangement according to Claim 3, the second projection (9) having a second face (31) for forming the gap with a second corresponding face (33) of the component (7) or of the second bearing part (19).

5. Sealing arrangement according to one of the preceding claims, the lubricant ring (10) which is fit in the annular groove (14) consisting of grease.

6. Sealing arrangement according to one of the preceding claims, the second bearing part (19) being a wheel hub or an inner ring (19).

7. Sealing arrangement according to one of the preceding claims, the component (7) being a second sealing ring (7).

8. Sealing arrangement according to one of the preceding claims, the first bearing part (18) being an outer ring (18) or a wheel hub.

9. Sealing arrangement according to one of the preceding claims, a further axial (4) and/or radial (15) sealing lip being shaped on the elastic part (26).

10. Sealing arrangement having a first sealing ring and a lubricant ring (10) according to one of the preceding Claims 1 to 9 and a second sealing ring (7) which can be fastened to the second bearing part (19).

11. Sealing arrangement according to Claim 10, the second sealing ring (7) or one of its constituent parts being provided for making contact with the lubricant ring (10) in the annular groove (14) of the first sealing lip (6) and having the first (34) and/or second (33) corresponding face.

12. Sealing arrangement according to Claim 11, the constituent part of the second sealing ring being an at least partially annular and/or a partially hollow-cylindrical constituent part.

13. Sealing arrangement according to Claim 10 or 11, the constituent part of the second sealing ring being formed by an elbow or a bend of the second sealing ring (7).

14. Sealing arrangement according to Claim 13, the sealing ring (7) having a magnetizable or magnetic material, in particular a transducer ring (25), in the bend region.

15. Antifriction bearing, in particular a wheel bearing, having a sealing arrangement according to one of Claims 1 to 14.

## Revendications

1. Ensemble d'étanchéité comportant une bague d'étanchéité destinée à assurer l'étanchéité d'un espace de roulement d'un palier à roulement et une bague de lubrifiant, la bague d'étanchéité comprenant une partie de support (16) retenant une partie élastique (26) et prévue sur une première partie de palier (18) à des fins de fixation et la bague d'étanchéité étant prévue au moyen d'une lèvre d'étanchéité axiale (6) sur la partie élastique (26) pour réaliser l'étanchéité de l'espace de roulement entre la première partie de palier (18) et une deuxième partie de palier (19) pouvant tourner par rapport à la première partie de palier (18) ou entre la première partie de palier (18) et un autre composant (7) mobile par rapport à la première partie de palier (18) et fixé à la deuxième partie de palier (19), **caractérisé en ce que** la lèvre d'étanchéité (6) est prévue pour former un interstice avec la deuxième partie de palier (19) ou avec le composant (7), et la lèvre d'étanchéité (6) comprend une rainure annulaire (14) avec la bague de lubrifiant (10) reçue dans celle-ci pour fermer l'interstice, et **en ce qu'**une surface en section transversale de la bague de lubrifiant (10) varie dans une direction périphérique.

2. Ensemble d'étanchéité selon la revendication 1, dans lequel la rainure annulaire (14) est formée par une première saillie (8) ou par la première saillie (8) et une deuxième saillie (9) de la lèvre d'étanchéité (6).

3. Ensemble d'étanchéité selon la revendication 2, dans lequel au moins la première saillie (8) comprend une première surface (32) pour la formation de l'interstice avec une première surface conjuguée (34) du composant (7) ou de la deuxième partie de palier (19).

4. Ensemble d'étanchéité selon la revendication 3, dans lequel la deuxième saillie (9) comprend une deuxième surface (31) pour la formation de l'interstice avec une deuxième surface conjuguée (33) du composant (7) ou de la deuxième partie de palier (19).

5. Ensemble d'étanchéité selon l'une quelconque des revendications précédentes, dans lequel la bague de lubrifiant (10) logée dans la rainure annulaire (14) est constituée de graisse.

6. Ensemble d'étanchéité selon l'une quelconque des revendications précédentes, dans lequel la deuxième partie de palier (19) est un moyeu de roue ou une bague intérieure (19).

7. Ensemble d'étanchéité selon l'une quelconque des revendications précédentes, dans lequel le composant (7) est une deuxième bague d'étanchéité (7).

8. Ensemble d'étanchéité selon l'une quelconque des revendications précédentes, dans lequel la première partie de palier (18) est une bague extérieure (18) ou un moyeu de roue.

9. Ensemble d'étanchéité selon l'une quelconque des revendications précédentes, dans lequel une lèvre d'étanchéité supplémentaire axiale (4) et/ou une lèvre d'étanchéité supplémentaire radiale (15) est/sont formée(s) sur la partie élastique (26).

10. Ensemble d'étanchéité comprenant une première bague d'étanchéité et une bague de lubrifiant (10) selon l'une quelconque des revendications précédentes 1 à 9 et une deuxième bague d'étanchéité (7) pouvant être fixée à la deuxième partie de palier (19).

11. Ensemble d'étanchéité selon la revendication 10, dans lequel la deuxième bague d'étanchéité (7) ou l'un de ses éléments constitutifs est prévu(e) pour la mise en contact de la bague de lubrifiant (10) dans la rainure annulaire (14) de la première lèvre d'étanchéité (6) et comprend la première (34) et/ou la deuxième (33) surface conjuguée.

12. Ensemble d'étanchéité selon la revendication 11, dans lequel l'élément constitutif de la deuxième bague d'étanchéité est un élément constitutif au moins partiellement annulaire et/ou un élément constitutif partiellement cylindrique creux.

13. Ensemble d'étanchéité selon la revendication 10 ou 11, dans lequel l'élément constitutif de la deuxième bague d'étanchéité est formé par une flexion ou une courbure de la deuxième bague d'étanchéité (7).

14. Ensemble d'étanchéité selon la revendication 13, dans lequel la bague d'étanchéité (7) comprend, dans la région de courbure, un matériau magnétisable ou magnétique, en particulier une bague de transducteur (25).

15. Palier à roulement, en particulier palier de roue, comprenant un ensemble d'étanchéité selon l'une quelconque des revendications 1 à 14.
